# EUROPEAN PATENT APPLICATION

(11) **EP 4 794 030 A1**
(43) Date of publication of application: **19.08.2026**
(21) Application number: 24877302.0
(22) Date of filing: 11.10.2024
(51) Int. Cl.: H01M 4/62, H01M 4/38, H01M 4/48, H01M 4/131, H01M 4/133, H01M 4/134, H01M 4/525, H01M 4/587

(54) **NON-AQUEOUS ELECTROLYTE SECONDARY BATTERY AND ELECTRODE USED THEREFOR**

(30) Priority: 13.10.2023 JP 2023177853
(71) Applicant: Panasonic Intellectual Property Management Co., Ltd., Kadoma-shi, Osaka 571-0057 (JP)
(72) Inventor: NAKAYAMA Takahito, Kadoma-shi, Osaka 571-0057 (JP); SATO Maho, Kadoma-shi, Osaka 571-0057 (JP); NISHINO Hajime, Kadoma-shi, Osaka 571-0057 (JP)
(74) Representative: Novagraaf International SA
(86) International application number: PCT/JP2024/036520
(87) International publication number: WO 2025/079708

(57) **Abstract**

A nonaqueous electrolyte secondary battery includes a first electrode, a second electrode, a nonaqueous electrolyte, and a separator provided between the first electrode and the second electrode. The first electrode includes a first current collector and a first active material layer supported on the first current collector. The first active material layer contains a first active material, a binder, and an additive. The additive is a polymer material having a melting point or thermal decomposition temperature of 200°C or higher and 500°C or lower. The polymer material has a linear structure.

## Description

### [Cross Reference to Related Application]

The present application is based on and claims priority under 35 U.S.C. §119 to Japanese Patent Application No. 2023-177853, filed on October 13, 2023, of which entire content is incorporated herein by reference into the present application.

### [Technical Field]

The present invention relates to a nonaqueous electrolyte secondary battery and an electrode using it.

### [Background Art]

Patent Literature 1 proposes a "nonaqueous electrolyte battery including a positive electrode with a positive electrode mixture layer containing a positive electrode active material, a negative electrode with a negative electrode mixture layer containing a negative electrode active material, and a nonaqueous electrolyte, wherein a polymer obtained by polymerizing monomer molecules having at least one of unit structures -C₆H₄-SO₂-, -C₆H₄-S-, and -C₆H₄-O- is added to either or both the positive electrode mixture layer and the negative electrode mixture layer".

Patent Literature 2 proposes a "negative electrode for lithium secondary batteries, including: a lithium metal layer; and a multilayer protective layer formed on the lithium metal layer, wherein the protective layer includes a first protective layer containing a carbon nanotube/ion-conductive polymer composite material; and a second protective layer containing a carbon nanotube/electrically conductive polymer composite material".

### [Citation List]

### [Patent Literature]

[Patent Literature 1] Japanese Laid-Open Patent Publication No. 2003-007303
[Patent Literature 2] Japanese Unexamined Patent Application Publication (Translation of PCT Application) No. 2019-506715

### Summary of Invention

### [Technical Problem]

As the energy density of secondary batteries increases, further improvement in safety is required. Among other things, reduction in heat generated due to internal short circuits is crucial. When a battery experiences an internal short circuit, the separator can melt by Joule heat of the short circuit current even in a small short circuit area, leading to formation of a larger short circuit area. As the short circuit area expands and the short circuit current increases, the battery temperature rises acceleratingly. As the energy density of the secondary battery increases, Joule heat generated by short circuit current also increases.

### [Solution to Problem]

One aspect of the present disclosure relates to a nonaqueous electrolyte secondary battery including: a first electrode; a second electrode; a nonaqueous electrolyte; and a separator provided between the first electrode and the second electrode, wherein the first electrode includes a first current collector and a first active material layer supported on the first current collector, the first active material layer contains a first active material, a binder, and an additive, the additive is a polymer material having a melting point or thermal decomposition temperature of 200°C or higher and 500°C or lower, and the polymer material has a linear structure.

Another aspect of the present disclosure relates to an electrode for secondary batteries, including: a first current collector; and a first active material layer supported on the first current collector, wherein the first active material layer contains a first active material, a binder, and an additive, the additive is a polymer material having a melting point or thermal decomposition temperature of 200°C or higher and 500°C or lower, and the polymer material has a linear structure.

### [Advantageous Effects of Invention]

According to the present disclosure, both high safety and favorable battery performance can be achieved.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

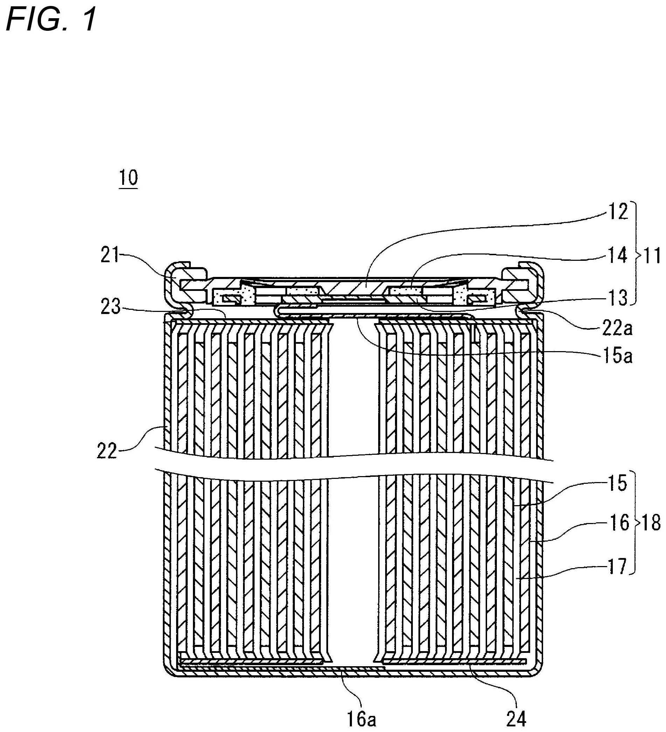

[FIG. 1] FIG. 1 is a schematic longitudinal cross-sectional view of the internal configuration of a secondary battery according to an embodiment of the present disclosure.

### [Description of Embodiments]

Embodiments of the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained. In the present description, the phrase "a numerical value A to a numerical value B" means to include the numerical value A and the numerical value B, and can be phrased as "a numerical value A or more and a numerical value B or less". In the following description, when the lower and upper limits of numerical values related to specific physical properties, conditions, or the like are mentioned as examples, any of the mentioned lower limits and any of the mentioned upper limits can be combined in any combination as long as the lower limit is not equal to or more than the upper limit.

Nonaqueous electrolyte secondary batteries include lithium-ion secondary batteries using at least a material that reversibly absorbs and releases lithium ions as a negative electrode active material, and solid batteries including a gel electrolyte or a solid electrolyte, for example.

Anonaqueous electrolyte secondary battery according to the present disclosure includes a first electrode, a second electrode, and a nonaqueous electrolyte. Typically, a separator is provided between the first electrode and the second electrode. The first electrode includes a first current collector and a first active material layer supported on the first current collector.

One of the first electrode and the second electrode is a positive electrode, and the other is a negative electrode. The negative electrode may or may not include a negative electrode active material layer. When the negative electrode does not include a negative electrode active material layer, the first electrode is the positive electrode.

### A. First Electrode

The first electrode includes a first current collector and a first active material layer. The first active material layer is formed on a surface of the first current collector. The first active material layer is made of an electrode mixture, and therefore may also be referred to as an electrode mixture layer.

### [First Current Collector]

The first current collector is formed of a sheet-shaped conductive material. As the first current collector, a non-porous conductive substrate (e.g., a metal foil) or a porous conductive substrate (e.g., a mesh, a net, or a punched sheet) is used.

### [First Active Material Layer]

The first active material layer is supported on one or both surfaces of the first current collector. The first active material layer contains a first active material, a binder, and an additive, and may contain a thickener and a conductive additive as optional components. The additive is a polymer material having a melting point or thermal decomposition temperature (hereinafter, "the melting point or thermal decomposition temperature" may be collectively referred to as the "diffusion temperature") of 200°C or higher and 500°C or lower.

In a cross section of the first active material layer, the polymer material preferably forms a plurality of island-shaped regions and is dispersed therein. The island-shaped regions are spot regions where the polymer material is present, and can be said to be particulate regions when viewed macroscopically. The island-shaped regions may be regions formed solely of the polymer material or may be an agglomerated region formed by agglomeration of the polymer material and a material (e.g., the first active material or the conductive additive) other than the polymer material. The shape of the island-shaped regions is not particularly limited, and may be irregular. The polymer material may be an insulative material or a mixture of an insulative material and a conductive material. In the following, a polymer material such as above is also referred to as a "polymer material (P)".

The polymer material (P) functions to suppress an increase in electrode resistance at room temperature while increasing electrode resistance at high temperatures upon occurrence of an internal short circuit. Therefore, both high safety and favorable battery performance can be achieved.

Specifically, the polymer material (P) has a function of partially blocking the conductive paths when the battery is increased in temperature due to an increase in short circuit current upon occurrence of an internal short circuit. At normal temperature, the polymer material (P) maintains its island shape and hardly increases the electrode resistance. By contrast, when an internal short circuit occurs, the polymer material (P) melts before the battery is excessively increased in temperature. The molten polymer material (P) diffuses within the first active material layer. The polymer material (P) having diffused within the first active material layer penetrates between particles of the first active material, between particles of the first active material and particles of the conductive additive, and between particles of the conductive additive to partially block the conductive paths.

When the polymer material (P) decomposes, the distance between the particles of the first active material increases to increase the electrode resistance. As a result, the short circuit current is reduced.

### (Diffusion Factor)

Desirably, the polymer material (P) diffuses as widely as possible within the first active material layer. The degree of diffusion of the polymer material (P) can be evaluated in terms of "diffusion factor" of the island-shaped regions in a cross section of the first active material layer. The diffusion factor refers to the ratio of an average area S (400°C <) of the island-shaped regions when the first active material layer is 400°C or higher to an average area S (25°C) of the island-shaped regions when the first active material layer is 25°C (i.e., S (400°C <)/S (25°C)). The diffusion factor may be 4 or more, 5 or more, or 6 or more. By controlling the diffusion factor as above, the short circuit current can be reduced effectively.

That is, when the first active material layer is increased in temperature from 25°C to 400°C or higher, the area of the island-shaped regions, which are occupied regions occupied by the polymer material (P), desirably increases to four times or more in the cross section of the first active material layer. The diffusion factor can be controlled based on the physical properties of the polymer material (P). The phrase "the area of the island-shaped regions increases to four times or more" means that the occupied regions being the island-shaped regions in the cross section of the first active material layer becomes four times or more those at 25°C due to diffusion of the polymer material (P). In other words, the polymer material (P) diffuses into regions having an area of four times or more the area of the initial occupied region.

### (Average Area)

The average area S (25°C) of the island-shaped regions at 25°C may be 200 µm² or less. When the average area S (25°C) of the island-shaped regions is 200 µm² or less, the dispersibility of the polymer material (P) is high, allowing the polymer material (P) to sufficiently diffuse over a wide area within the first active material layer at high temperatures to significantly increase resistance. The average area S (25°C) of the island-shaped regions may be 120 µm² or less, 60 µm² or less, 50 µm² or less, or 30 µm² or less. The lower limit of the average area S (25°C) of the island-shaped regions is not particularly limited, and may be, for example, 10 µm² or more.

The average area S (400°C <) of the island-shaped region at 400°C or higher may be four times or more S (25°C), or may be five times or more, or six times or more. In this case, due to the polymer material (P) having high dispersibility, the resistance can be significantly increased over a wide area within the first active material layer at high temperatures. The upper limit of the average area S (400°C <) of the island-shaped regions is not particularly limited.

The average area S (25°C) does not need to be measured strictly at 25°C. When the average area S (25°C) is measured at room temperature (e.g., 15°C to 40°C), the same value can be obtained regardless of the seasons. Unless otherwise specified, the dimensions of the island-shaped regions below mean the dimensions measured at room temperature (e.g., 15°C to 40°C).

Here, the average areas (S (25°C) and S (400°C <)) of the island-shaped regions are areas obtained by dividing total areas St, at the respective temperatures, of a plurality of island-shaped regions included in an observation area in the cross section of the first active material layer, by the number N of the island-shaped regions included in the observation area. However, the size of the observation area is set such that at least 30 island-shaped regions or more are observed. The height of the observation area may be, for example, the same as a thickness (T) of the first active material layer, or 80% or more of the thickness. Alength (W) of the observation area in the plane direction of the first active material layer may be 200 µm to 500 µm. In this case, the size of the observation area is T × W (µm²).

### (Average Perimeter)

Next, the average perimeter of the island-shaped regions is desirably 60 µm or less. When the average perimeter of the island-shaped regions is 60 µm or less, the size of the plurality of island-shaped regions is considered sufficiently small. When the average perimeter is sufficiently small, the dispersibility of the polymer material (P) is sufficiently high, allowing the polymer material (P) to diffuse over a wide area within the first active material layer at high temperatures due to occurrence of an internal short circuit. As a result, the electrode resistance can be increased significantly. The average perimeter of the island-shaped regions may be 60 µm or less, 40 µm or less, 30 µm or less, or 20 µm or less. The lower limit of the average perimeter of the island-shaped regions is not particularly limited, and may be, for example, 1 µm or more.

Here, the average perimeter of the island-shaped regions is a length obtained by dividing the sum of the lengths of the perimeters (outer contour lengths) of a plurality of island-shaped regions included in the observation area of the cross section of the first active material layer by the number N of the island-shaped regions included in the observation area. However, the size of the observation area is set to be the same as that used in calculating the average area of the island-shaped regions.

### (Variance of Voronoi Diagram)

Next, the variance of a Voronoi diagram (hereinafter also referred to as a "Voronoi variance") when the island-shaped regions in the observation area is subjected to Voronoi tessellation may be 2 × 10⁷ µm⁴ or less. The smaller the Voronoi variance, the more favorable the dispersibility can be considered. When the Voronoi variance is 2 × 10⁷ µm⁴ or less, the polymer material (P) can diffuse over a wide area within the first active material layer at high temperatures due to occurrence of an internal short circuit. As a result, the electrode resistance can be significantly increased. The Voronoi variance may be 2 × 10⁶ µm⁴ or less, 2 × 10⁵ µm⁴ or less, 1 × 10⁵ µm⁴ or less, or 5 × 10⁴ µm⁴ or less. The lower limit of the Voronoi variance is not particularly limited, and may be, for example, 1 × 10⁴ µm⁴ or more.

The size of the observation area subject to Voronoi tessellation is set to be the same as that used in calculating the average area of the island-shaped regions. Specifically, Voronoi tessellation is performed using the centers (centroids) of all island-shaped regions included in the observation area as seed points, and a histogram of the tessellated regions is calculated to determine a Voronoi variance. The Voronoi variance is determined as the average of three or more Voronoi variances obtained from at least three observation areas.

### (Agglomerated Particle Area)

Next, the average area (hereinafter referred to as an "agglomerated particle area") of the top three largest island-shaped regions of all island-shaped regions in the first active material layer is preferably 900 µm² or less. When the agglomerated particle area of the island-shaped regions is 900 µm² or less, it can be said that the dispersibility of the polymer material (P) is sufficiently high. Accordingly, the polymer material (P) can diffuse over a wide area within the first active material layer at high temperatures due to occurrence of an internal short circuit, significantly increasing the resistance. The agglomerated particle area of the island-shaped regions may be 800 µm² or less, 700 µm² or less, or 400 µm² or less. The lower limit of the agglomerated particle area of the island-shaped regions is not particularly limited, and may be, for example, 100 µm² or more. The top three largest island-shaped regions in terms of area are considered to be agglomerated regions of the polymer material (P) or agglomerated regions of the polymer material (P) and the first active material or the conductive additive. Sufficient reduction in the area of the agglomerated regions such as above can remarkably increase the dispersibility of the polymer material (P).

Here, the agglomerated particle area of the island-shaped regions is defined as an area obtained by dividing by 3 the total area of the island-shaped region with the largest area, the island-shaped region with the second largest area, and the island-shaped region with the third largest area among the plurality of island-shaped regions included in the observation area of the cross section of the first active material layer. The size of the observation area is set to be the same as that used in calculating the average area of the island-shaped regions. However, the agglomerated particle area of the island-shaped regions is determined as the average of three or more agglomerated particle areas obtained from at least three different observation areas (cross sections).

The diffusion factor, average area, average perimeter, variance of the Voronoi diagram, agglomerated particle area, and the like of the island-shaped regions can be measured according to the following procedures.

### (1) Preparation of Cross Section of First Active Material Layer

First, a first electrode, which is a measurement target, is prepared. Next, the first active material layer and the first current collector are simultaneously cut in the thickness direction of the first electrode to form a cross section. In doing so, a thermosetting resin may be filled into the first active material layer and cured. Across-section sample of the first active material layer is obtained, for example, by the cross-section polisher (CP) method or the focused ion beam (FIB) method.

The first electrode, which is the measurement target, is taken out of a secondary battery having a depth of discharge (DOD) of 90% or more. The depth of discharge (DOD) refers to the ratio of the amount of electricity discharged to the amount of electricity that a battery in the fully charged state has. In addition, the rated capacity corresponds to the amount of electricity charged (i.e., full charge capacity) when a battery in the fully discharged state (DOD = 100%) is charged to the fully charged state (SOC = 100%, DOD = 0%). The voltage of the battery in the fully charged state corresponds to the charge termination voltage. The voltage of the battery in the fully discharged state corresponds to the discharge termination voltage.

### (2) Capture of Cross Section of First Active Material Layer Using Scanning Electron Microscope (SEM)

Next, the cross-section sample of the first active material layer is observed using a SEM. Observation using a SEM is performed, for example, at a magnification of 100 times to 500 times. A SEM image is captured so that an area with a length of 200 µm or more (desirably 300 µm or more) in the plane direction of the first active material layer can be observed.

### (3) Elemental Analysis

Elemental analysis is performed using the SEM image of the cross-section sample by energy dispersive X-ray spectroscopy (EDX) or using an electron probe micro analyzer (EPMA). By extracting a component (e.g., elemental sulfur) derived from the polymer material (P) from analysis data of the cross section, a mapped image of the polymer material (P) can be obtained. Analysis of the mapped image using image analysis software can calculate, for example, the average areas (S (25°C) and S (400°C <)), average perimeter, variance of Voronoi diagram, and agglomerated particle area of the island-shaped regions. For example, in analysis of the regions in the observation area divided into 256 × 256 grids by EDX, the mapped image can be obtained by binarization to assign black to a component (e.g., elemental sulfur) derived from the polymer material (P) and assign white to the other regions. When a cluster consisting of two or more black regions adjacent in the vertical, horizontal, or diagonal direction is taken as a single island-shaped region, the length of the contour surrounding the cluster is the perimeter of the island-shaped region. When a solitary black region is taken as a single island-shaped region, the length of the contour surrounding the single black region is the perimeter of the island-shaped region, and the areas surrounded by the contours are the areas of the respective island-shaped regions.

Next, a method for obtaining a variance of the Voronoi diagram is described.

First, Voronoi tessellation is performed on the binarized image using image analysis software. In Voronoi tessellation, the centers of independent island-shaped regions are extracted, and the space is divided into a plurality of regions (hereinafter, also referred to as a "Voronoi regions") according to which center each of the other points in the same distance space is closest to. The boundaries between the Voronoi regions correspond to the loci of the bisectors between the centers. Then, the area of each Voronoi region is extracted, and these variances are taken as the Voronoi variances. A variance V can be calculated using the following formula assuming the area of each Voronoi region to be Xi (i = 1, 2, . . . n) and the average to be Xave. $V = 1 / nΣ {\left(Xi-Xave\right)}^{2}$

### (4) Analysis Conditions

The following describes desirable SEM-EPMA measurement conditions for analyzing the cross-section sample of the first active material layer.

Although not particularly limited, IB-19520 CCP (cross-section polisher) manufactured by JEOL Ltd. is used as a processing device, for example. In using the device, the processing conditions include an acceleration voltage of 6 kV and a current value of 150 to 180 µA. The degree of vacuum is set to 5 × 10⁻⁴ to 2 × 10⁻³ Pa.

Although not particularly limited, JSM-7900F (field emission scanning electron microscope) manufactured by JEOL Ltd. and XM-86030 (EPMA detector) manufactured by JEOL Ltd. are used as measurement devices, for example. In using them, the acceleration voltage for analysis is set to 8 kV, and the SEM acceleration voltage is set to 2 kV. The amount of the electron beam current is set to 5 × 10⁻⁸ A, and the observation magnification is set to 300 times. The measurement time is 30 ms.

In binarization, black may be assigned to regions in which a component (e.g., elemental sulfur) derived from the polymer material (P), which is detected under the above conditions, has an X-ray detection count of 50 cps or more and a signal-to-noise intensity ratio of 1.5 or more, and white may be assigned to the other regions.

### [Polymer material (P)]

The following describes desirable polymer materials (P) using examples.

The melting point or thermal decomposition temperature (diffusion temperature) of the polymer material (P) is 200°C or higher and 500°C or lower. The first active material layer typically contains a polymer material functioning as a binder besides the polymer material (P). However, the binder has higher bonding strength than the polymer material (P). The binder may not form island-shaped regions. In other words, the first active material layer may contain a polymer material that forms island-shaped regions and a polymer material that does not form island-shaped regions. Further, a polymer that does not usually melt or undergo thermal decomposition at a diffusion temperature of 200°C or higher and 500°C or lower may be used as the binder. When the diffusion temperature of the polymer material (P) is below 200°C, there is a possibility that the polymer material (P) will melt or decompose during normal battery use or manufacturing processes, leading to deterioration of the battery performance. When the diffusion temperature of the polymer material (P) exceeds 500°C by contrast, the diffusion rate of the polymer material (P) decreases when the temperature rises, leading to insufficient resistance enhancement effect.

Preferably, the polymer material (P) has a linear structure. In other words, it is desirable that the polymer material (P) is a linear polymer having no crosslinked structure. The linear polymer having no crosslinked structure has a high degree of freedom, and tends to easily diffuse and decompose within the first active material layer at high temperatures. Accordingly, the polymer material (P) tends to easily penetrate between particles of the first active material, between particles of the first active material and particles of the conductive additive, and between particles of the conductive additive, tending to partially block the conductive paths.

However, the polymer material (P) may partially include a crosslinked polymer having a crosslinked structure. In this case, the content of the linear polymer having no crosslinked structure in the polymer material (P) is preferably 80% by mass or more, and may be 90% by mass or more, or even 100%.

### (Melt Viscoelasticity)

The content of the linear polymer having no crosslinked structure in the polymer material (P) can be estimated by measuring the melt viscoelasticity. In melt viscoelasticity measurement, the storage modulus G' (elastic term), loss modulus G" (viscos term), and complex viscosity η* (viscosity term) can be determined by applying periodic deformation (strain) to the polymer material (P) and detecting the resulting stress and phase difference.

The higher the content of the linear polymer having no crosslinked structure in the polymer material (P), the smaller the ratio (η100/η1) between the complex viscosity η1 (Pa·s) at an angular frequency of 1 rad/s and the complex viscosity η100 (Pa·s) at an angular frequency of 100 rad/s of the polymer material (P) at 350°C. η100/η1 may be 5 or less, or may be 4 or less.

Desirable melt-viscoelasticity measurement conditions for the polymer material (P) are indicated below.

The melt viscoelasticity at a given temperature can be measured using a melt viscoelasticity measurement device (e.g., ARES-G2, though not limited particularly) manufactured by TA Instruments Japan, Inc., for example.

Examples of detailed measurement conditions are as follows.
Geometry: cone plate 25 mm Φ, cone angle 0.1 rad (about 5.7°), dynamic measurement
Sweep type: frequency sweep
Frequency range: 400 to 0.1 rad/s
Measurement interval: 5 points/decade
Strain: 10 to 200% AUTO setting
Measurement temperature: 350°C
Atmosphere: in a nitrogen flow

### (Average Particle Diameter (D50))

The polymer material (P) is in the form of powder prior to being mixed into the electrode mixture (the first active material layer). Desirably, the average particle diameter (D50) of the particles of the polymer material (P) constituting powder is 50 µm or less. As a result of the average particle diameter (D50) being set to 50 µm or less, the aforementioned average area, average perimeter, agglomerated particle area, Voronoi variance, and the like can be easily controlled within the respective desired numerical ranges. The average particle diameter (D50) is more desirably 40 µm or less, with 30 µm or less being even more desirable. The lower limit of the average particle diameter (D50) is not particularly limited, and may be, for example, 1 µm or more.

The average particle diameter (D50) of the polymer material (P) herein refers to a median diameter at which the cumulative volume is 50% in volume-based particle size distribution of the polymer material (P). The volume-based particle size distribution of the polymer material (P) can be measured using a laser diffraction scattering particle size distribution measuring device, for example. A sample of the polymer material (P), which is a measurement target, may be prepared by separating the polymer material (P) from the first active material layer. Alternatively, when a raw material of the polymer material (P) prior to being mixed into the negative electrode active material layer is available, the raw material may be used.

### (Aspect Ratio)

The aspect ratio (DL/DW) is preferably 1.5 or less. Here, DL represents the length of the major axis of particles constituting the powder of the polymer material (P), the major axis defining the maximum diameter thereof, and DW represents the length of the minor axis perpendicular to the major axis at the midpoint thereof. A smaller aspect ratio increases the diffusion factor of the island-shaped regions within the first active material layer while suppressing agglomeration of the island-shaped regions, allowing the polymer material (P) to efficiently diffuse over a wide area within the first active material layer at high temperatures due to occurrence of an internal short circuit.

The aspect ratio (DL/DW) of the polymer material (P) can be determined using a SEM image of a plurality of particles. Observation using a SEM is performed, for example, at a magnification of 100 times to 500 times. The length DL of the major axis of the particles of the polymer material refers to the diameter of the circle circumscribing the outline (contour) of each particle of the polymer material in the SEM image. The length DW of the minor axis refers to the dimension of the particle in the direction perpendicular to the major axis at the midpoint thereof. At least 30 particles are measured and the average value is taken as the aspect ratio (DL/DW). A microscope or the like may be used for particle observation.

### (BET Specific Surface Area)

Desirably, the BET specific surface area of the polymer material (P) is 10 m²/g or less. While the BET specific surface area is affected by the particle diameter of the polymer material (P), the state of the particles themselves has a significant impact thereon. For example, when the surfaces of the particles have many recesses and projections or the particles themselves are porous, the BET specific surface area is large even when the average particle diameter (D50) is small. When the BET specific surface area is 10 m²/g or less, it is considered that there are few recesses and projections on the surfaces of the particles of the polymer material (P) or the particles themselves do not have many pores. In these cases, it is inferred that expansion stress acts strongly on the polymer material (P) during heating to enhance its diffusivity during heating. The BET specific surface area may be 5 m²/g or less, 2 m²/g or less, or even 1.8 m²/g or less.

Here, the BET specific surface area of the polymer material (P) is measured by the gas adsorption method (single-point BET method). Nitrogen gas is used as gas. Details of the BET method may be in accordance with JIS R1626. A sample of the polymer material (P), which is a measurement target, may be prepared by separating the polymer material (P) from the first active material layer. Alternatively, when the raw material of the polymer material (P) prior to being mixed into the first active material layer is available, the raw material of the polymer material (P) may be used.

### (Weight Average Molecular Weight (Mw))

The weight average molecular weight (Mw) of the polymer material (P) desirably satisfies Mw < 50,000, and more desirably satisfies 5000 ≤ Mw < 50,000. As a result of the weight average molecular weight (Mw) satisfying Mw < 50,000 (or even satisfying 5000 ≤ Mw < 50,000), the melting rate of the polymer material (P) during heating increases to enhance dispersibility and promote thermal decomposition. Thus, the resistance of the first active material layer is significantly increased. Mw is more desirably 30,000 or less, further desirably 20,000 or less, and may be 15,000 or less.

The weight average molecular weight (Mw) of the polymer material (P) can be measured by ultra-high temperature gel permeation chromatography (GPC), for example. Here, Mw is the weight average molecular weight in terms of polystyrene standards.

The measurement conditions in ultra-high-temperature GPC are indicated below. The measurement device used is an ultra-high-temperature GPC, SSC-7110. One TSK guard column HHR(S)HT and two TSK gel columns GMHHR-H(S) HT (7.8 mm I.D. × 30 cm) are used as columns. A refractive index detector (RI detector) is used as a detector. For sample pretreatment, a sample of the polymer material (P) is weighed and a specific amount of 1-chloronaphthalene (1-CN) is added thereto as a solvent. The resulting substance is then heated and dissolved at 250°C for 1 hour. Thereafter, filtration is performed using a PTFE filter having a pore size of 0.5 µm while heating. As the injection amount, 500 µL of a solution of the sample at a concentration of 2 mg/mL is injected. The flow rate is set to 1.0 mL/min, with the measurement temperature set to the column temperature, 210°C, and the pre-oven temperature set to 250°C. Polystyrene is used as the molecular weight standard.

Regarding the data (peak) acquired, the low molecular weight side of the polymer material (P) can be partially overlapped with the blank originating from the GPC eluting liquid, but the entire peak including the above region is analyzed to determine the weight average molecular weight.

### (Specific Example of Polymer Material (P))

Hereinafter, a preferable example of the polymer material (P) is described.

Among polymer materials (P), a polymer material (P) with a main chain having a phenylene group and a sulfide group (hereinafter also referred to as a "polymer material (PS)") has high chemical stability and is less likely to bond with other materials. Therefore, the particles of the negative electrode active material are not excessively covered and island-shaped regions are likely to be formed in the first active material layer. Furthermore, the polymer material (PS) undergoes a significant state change when melting at temperatures above its melting point, and can exhibit high diffusivity within the first active material layer. When using the polymer material (PS), sulfur atoms can be used as components derived from the polymer material (P) in elemental analysis, for example, by SEM-EDX or using a SEM-EPMA.

The main chain of a polymer material (PS) has a repeating structure represented, for example, by the formula: 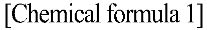 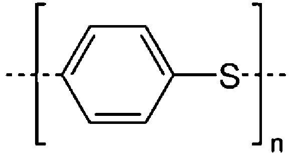 (where n is any integer). In the polymer, n is typically 20 or more, or 30 or more. Such a simple structure has high chemical stability and hardly causes side reactions within the first active material layer. Moreover, the polymer material (PS) having the structure represented by the above formula is typically a linear polymer having no crosslinked structure, and has a high degree of freedom upon melting and high diffusivity within the first active material layer after melting. The polymer material (PS) having such a structure is considered to be highly insulating and have a prominent function of blocking the conductive paths when entering between particles of the first active material, between particles of the first active material and particles of the conductive additive, and between particles of the conductive additive.

A more specific example of the polymer material (PS) is polyphenylene sulfide, also referred below to as "PPS".

The polymer material (P) may contain chloride ions in an amount of 10 ppm or more and 1000 ppm or less in terms of mass, or even 10 ppm or more and 500 ppm or less. The amount of the chloride ions contained in the polymer material (P) can be measured, for example, by peeling off the first active material layer from the first electrode, separating the polymer material (P) from the first active material layer, and performing analysis by ion chromatography using ion-exchanged water as a solvent.

Only a small amount of polymer material (P) needs to be contained in the first active material layer. The content of the polymer material in the first active material layer may be, for example, 0.01% by mass or more and 5% by mass or less, 0.1% by mass or more and 5% by mass or less, 0.3% by mass or more and 3% by mass or less, or 0.5% by mass or more and 2% by mass or less.

### < First Electrode Production Method >

Next, an example of a first electrode production method according to an embodiment of the present disclosure is described.

The production method includes: a step (I) of preparing a first electrode slurry containing a first active material, a binder, a polymer material (P), and a dispersion medium; a step (II) of preparing a first current collector; a step (III) of applying the first electrode slurry to a surface of the first current collector to form a coated film; a step (IV) of drying the coated film to form an unrolled layer; and a step (V) of rolling the unrolled layer to form a first active material layer.

### (I) Slurry Preparation Step

The first electrode slurry is prepared by mixing a first electrode mixture containing a first active material, a binder, and a polymer material (P) with a liquid dispersion medium and dispersing it in the dispersion medium. The first electrode mixture may further contain other components (e.g., a thickener and a conductive additive). Water or an organic solvent, which have excellent affinity with the binder, can be used as the liquid dispersion medium.

The average area, average perimeter, aspect ratio, Voronoi variance, agglomerated particle area, and the like of the island-shaped regions formed of the polymer material (P) can be controlled based on the dispersion state of the polymer material (P) in the first electrode slurry. The polymer material (P) tends to have significantly enhanced dispersibility when dry mixed in advance with the first active material. However, the first electrode slurry preparation method is not particularly limited as long as the desired dispersion state of the polymer material (P) is achieved. For example, it is possible that the polymer material (P) is wet mixed in advance with the conductive additive and then the first active material is further added to and mixed with the resulting mixture.

Although the dispersion medium is not particularly limited, examples thereof include: water; alcohols such as ethanol; ethers such as tetrahydrofuran; amides such as dimethylformamide; N-methyl-2-pyrrolidone (NMP); and a mixed solvent of these.

Although the binder is desirably a resin material such as styrene-butadiene rubber, but is not particularly limited as long as it has high bonding strength and is stable within the first active material layer.

### (II) First Current Collector Preparation Step

As the first current collector, a sheet-shaped conductive material (e.g., a metal foil, a mesh, a net, or a punched sheet) is used. A metal foil is preferable among these options. When the first current collector is a negative electrode current collector, examples of the material of the first current collector include stainless steel, nickel, nickel alloys, copper, and copper alloys. When the first current collector is a positive electrode current collector, examples thereof include stainless steel, aluminum, aluminum alloys, and titanium. The thickness of the first current collector is not particularly limited, and is, for example, 1 to 50 µm, and may be 5 to 30 µm.

### (III) Step of Forming Coated Film of First Electrode Slurry

The first electrode slurry is applied to a surface of the first electrode current collector to form a coated film. Examples of an apparatus used for applying the first electrode slurry include bar coaters, gravure coaters, blade coaters, roll coaters, comma coaters, die coaters, and lip coaters.

### (IV) Coated Film Drying Step

Next, the coated film is dried to volatilize the dispersion medium, thereby forming an unrolled coated film. For example, when drying the coated film at a temperature of 150°C or higher, or even at a temperature of 180°C or higher, the polymer material (P) tends to be unevenly distributed on the separator side of the first active material layer rather than the first current collector side.

### (V) Unrolled Layer Rolling Step

Next, the unrolled layer is rolled to form the first active material layer. Although the conditions for rolling are not particularly limited, the density of the first active material in the first active material layer is, for example, 1.0 g/cm³ or more and 2.0 g/cm³ or less when the first electrode is a negative electrode, and may be 1.5 g/cm³ or more and 1.7 g/cm³ or less. When the first electrode is a positive electrode, it is, for example, 3.3 g/cm³ or more and 4.0 g/cm³ or less, and may be 3.5 g/cm³ or more and 4.0 g/cm³ or less.

### B. Secondary Battery

Anonaqueous electrolyte secondary battery according to an embodiment of the present disclosure includes a positive electrode, a negative electrode, a nonaqueous electrolyte, and a separator provided between the positive electrode and the negative electrode. The nonaqueous electrolyte secondary battery may be either a liquid electrolyte secondary battery including an electrolyte solution as the electrolyte or an all-solid-state secondary battery including a solid electrolyte as the electrolyte. In the following, the configuration of the secondary battery is described in detail by referring to a lithium-ion secondary battery as an example. One of the first electrode and the second electrode is the positive electrode and the other is the negative electrode. Either the first electrode or the second electrode can be the positive (negative) electrode.

### [Negative Electrode]

The negative electrode includes a negative electrode current collector and may include a negative electrode active material layer supported on one or both surfaces of the negative electrode current collector. When the negative electrode is the first electrode, the negative electrode current collector is the first current collector, the negative electrode active material is the first active material, and the positive electrode is the second electrode.

A sheet-shaped conductive material (e.g., a metal foil, a mesh, a net, or a punched sheet) is used as the negative electrode current collector. Among these options, a metal foil is preferable. Examples of the material of the negative electrode current collector include stainless steel, nickel, nickel alloys, copper, and copper alloys. The thickness of the negative electrode current collector is not particularly limited, and may be, for example, 1 to 50 µm, and may be 5 to 30 µm.

When the negative electrode includes a negative electrode active material layer, the negative electrode active material layer is made of a negative electrode mixture, and may be referred to as a negative electrode mixture layer. The negative electrode mixture contains a negative electrode active material, a binder, and a polymer material (P) as essential components, and may contain an optional component. The optional components can include a conductive additive and a thickener, for example.

The negative electrode mixture layer can be formed, for example, by applying a negative electrode slurry, in which the negative electrode mixture is dispersed in a dispersion medium, onto the surface(s) of the negative electrode current collector, followed by drying. The coated film after drying may be rolled, if necessary.

The thickness of the negative electrode active material layer is not particularly limited, and may be, for example, 50 µm or more and 200 µm or less, or 75 µm or more and 150 µm or less. A plurality of layers having different forms may form a single negative electrode active material layer. For example, two or more layers containing negative electrode active materials with different average particle diameters may be laminated, or two or more layers containing different types or compositions of negative electrode active materials may be laminated.

The negative electrode active material contains a material that electrochemically absorbs and releases lithium ions. As the material that electrochemically absorbs and releases lithium ions, at least one selected from the group consisting of a carbon material and a silicon-containing material is preferable. That is, the first active material may contain at least one selected from the group consisting of a carbon material and a silicon-containing material.

Examples of the carbon material include graphite, graphitizable carbon (soft carbon), and non-graphitizable carbon (hard carbon). Among these options, graphite is preferable that is excellent in stability during charging and discharging and that has small irreversible capacity.

Examples of the silicon-containing material include elemental silicon, composite materials of silicon and SiO₂, composite materials of silicon and lithium silicate, and composite materials of silicon and carbon.

In combinational use of a carbon material and a silicon-containing material, the content of the silicon-containing material relative to the total of the carbon material and the silicon-containing material is, for example, 1% by mass or more and 100% by mass or less, and may be 3% by mass or more and 15% by mass or less.

The average particle diameter (D50) of particles of the carbon material is, for example, 5 µm or more and 30 µm or less, and may be 10 µm or more and 20 µm or less. The average particle diameter (D50) of the silicon-containing material is, for example, 3 µm or more and 18 µm or less, and may be 6 µm or more and 15 µm or less. The average particle diameter (D50) herein also refers to the median diameter when the cumulative volume is 50% in the volume-based particle size distribution.

The average particle diameter of the negative electrode active material may be measured from a cross-section sample of the negative electrode active material layer as the above-described first active material layer. It is possible that: a SEM image of the cross section is captured so that 10 or more particles of the negative electrode active material can be observed; image processing is performed to determine the diameters of the equivalent circles having the same areas as the cross-sections of the 10 or more particles of the negative electrode active material; and the average value of these is taken as the average particle diameter.

Examples of the binder that can be contained in the negative electrode active material layer include fluorocarbon resins, acrylic resins, and rubber materials. Examples of the fluorocarbon resins include polyvinylidene fluoride, polytetrafluoroethylene, and tetrafluoroethylene-hexafluoropropylene copolymers. Examples of the acrylic resins include polyacrylic acid and acrylic acid-methacrylic acid copolymers. Styrene-butadiene rubber is an example of the rubber material.

Examples of the conductive additive include carbon nanotube (CNT), carbon fibers other than CNT, and conductive particles (e.g., carbon black).

A water-soluble polymer is used as the thickener, for example. Examples of the water-soluble polymer include carboxymethyl cellulose (CMC) and modified products thereof (including salts such as Na salt), cellulose derivatives such as methyl cellulose (e.g., cellulose ether); saponified products of polymers having a vinyl acetate unit, such as polyvinyl alcohol; polyethers (e.g., polyalkylene oxides such as polyethylene oxide).

### [Positive Electrode]

The positive electrode includes a positive electrode current collector and a positive electrode active material layer supported on one or both surfaces of the positive electrode current collector. When the positive electrode is the first electrode, the positive electrode current collector is the first current collector, the positive electrode active material is the first active material, and the negative electrode is the second electrode.

A sheet-shaped conductive material (e.g., a metal foil, a mesh, a net, or a punched sheet) is used as the positive electrode current collector. Among these options, a metal foil is preferable. Examples of the material of the positive electrode current collector include stainless steel, aluminum, aluminum alloys, and titanium. The thickness of the positive electrode current collector is not particularly limited, and is, for example, 1 to 50 µm, and may be 5 to 30 µm.

The positive electrode active material layer is made of a positive electrode mixture and may accordingly be referred to as a positive electrode mixture layer. The positive electrode mixture layer is film shaped or sheet shaped. The positive electrode mixture contains particles of a positive electrode active material as essential components, and can contain, for example, a binder and a conductive additive as optional components.

The positive electrode mixture layer can be formed, for example, by applying a positive electrode slurry, in which the positive electrode mixture is dispersed in a dispersion medium, onto the surface(s) of the positive electrode current collector, followed by drying. The coated film after drying may be rolled, if necessary.

The thickness of the positive electrode active material layer is not particularly limited, and may be, for example, 50 µm or more and 150 µm or less, or may also be 75 µm or more and 125 µm or less. A plurality of layers having different forms may form a single positive electrode active material layer. For example, two or more layers containing positive electrode active materials with different average particle diameters may be laminated, or two or more layers containing different types or compositions of the positive electrode active material may be laminated.

The average particle diameter (D50) of the particles of the positive electrode active material is, for example, 1 µm or more and 50 µm or less, and may be 5 µm or more and 25 µm or less. The average particle diameter (D50) herein also refers to the median diameter when the cumulative volume is 50% in the volume-based particle size distribution.

The positive electrode active material may contain a lithium-containing transition metal oxide. From the viewpoint of achieving high capacity, it is desirable that the lithium-containing transition metal oxide contains lithium and Ni and includes a lithium nickel oxide (composite oxide N) having a layered rock-salt type crystal structure. The proportion of the composite oxide N in the positive electrode active material is, for example, 70% by mass or more, and may be 90% by mass or more, or 95% by mass or more. The proportion of Ni among metal elements other than Li in the composite oxide N may be 50 at% or more.

The composite oxide N is represented by the formula (1): Li_{α}Niₓ₁M1ₓ₂M2₍₁₋ₓ₁₋ₓ₂₎O_{2+β}, for example. Here, the element M1 is at least one selected from the group consisting of V, Co, and Mn. The element M2 is at least one selected from the group consisting of Mg, Al, Ca, Ti, Cu, Zn, and Nb. However, the formula (1) satisfies 0.95 ≤ α ≤ 1.05, -0.05 ≤ β ≤ 0.05, 0.5 ≤ x1 < 1, 0 ≤ x2 ≤ 0.5, and 0 < 1 - x1 - x2 ≤ 0.5. α increases or decreases during charging and discharging.

The composite oxide N contains Ni and may also contain at least one selected from the group consisting of Co, Mn, and Al as the elements M1 and M2. Co, Mn, and Al contribute to stabilization of the crystal structure of the composite oxide N.

From the viewpoint of cost reduction and capacity increase, the proportion of Co among the metal elements other than Li in the composite oxide N is desirably 0 at% or more and 20 at% or less, and more desirably 0 at% or more and 15 at% or less.

The proportion of Mn among the metal elements other than Li may be 10 at% or less, or may be 5 at% or less. The proportion of Mn among the metal elements other than Li may be 1 at% or more, 3 at% or more, and 5 at% or more.

The proportion of Al among the metal elements other than Li may be 10 at% or less, or 5 at% or less. The proportion of Al among the metal elements other than Li may be 1 at% or more, 3 at% or more, and 5 at% or more.

For example, fluorocarbon resin or hydrogenated nitrile butadiene rubber is desirably used as the binder that can be contained in the positive electrode active material layer. However, the binder is not particularly limited as long as it has high bonding strength and is stable in the positive electrode active material layer. Examples of the fluorocarbon resin include polyvinylidene fluoride (PVDF), polytetrafluoroethylene (PTFE), perfluoroalkoxy alkanes (PFA), tetrafluoroethylene-hexafluoropropylene copolymers (FEP), ethylene-tetrafluoroethylene copolymers (ETFE), and vinylidene fluoride-hexafluoropropylene copolymers, among which PVDF is preferable.

Examples of the conductive additive that can be contained in the positive electrode active material layer as an optional component include carbon nanotube (CNT), carbon fibers other than CNT, and conductive particles (e.g., carbon black and graphite).

### [Separator]

The separator is provided between the positive electrode and the negative electrode. The separator has high ion permeability and moderate mechanical strength and insulating properties. Examples of the separator include a microporous thin film, a woven fabric, and a nonwoven fabric. Polyolefin such as polypropylene or polyethylene is used as the material of the separator.

The thickness of the separator may be 5 µm to 25 µm, for example.

The separator may include a substrate layer and a heat-resistant layer laminated on the substrate layer. A microporous thin film, woven fabric, or nonwoven fabric can be used as the substrate layer. The heat-resistant layer can be provided on at least one of the surfaces of the substrate layer. Desirably, the heat-resistant layer is provided on at least the positive electrode side of the separator.

Here, it is desirable that the melting point or thermal decomposition temperature (diffusion temperature) of the polymer material (P) is higher than the melting point of the substrate layer. As the material of the substrate layer, a thermoplastic resin having a melting point is typically used. Among all, polyolefin such as polypropylene or polyethylene is preferably used. A substrate layer formed of a thermoplastic resin is typically configured to have a shutdown function by which voids of the substrate layer are clogged at high temperatures above a predetermined temperature. In other words, it is required that the battery allows current to flow therein and exhibits sufficient performance as a power source until the shutdown function acts. If the diffusion temperature of the polymer material (P) is lower than the melting point of the substrate layer, there is a risk that the resistance of the electrode active material layer may increase in the presence of the polymer material (P), failing to ensure sufficient performance as a power source.

The heat-resistant layer may contain an inorganic oxide filler as a main component (e.g., 80% by mass or more of the heat-resistant layer) or may contain a heat-resistant resin as a main component (e.g., 40% by mass or more of the heat-resistant layer). The heat-resistant resin may be a polyamide resin such as an aromatic polyamide (aramid), a polyimide resin, or a polyamideimide resin.

The thickness of the substrate layer may be, for example, 0% to 100% of the thickness of the separator, and may be, for example, 5 µm to 20 µm. When the thickness of the substrate layer is 0% (the substrate layer is absent), a separator consisting only of the heat-resistant layer may be used.

The thickness of the heat-resistant layer may be, for example, 0% to 100% of the thickness of the separator, and may be, for example, 0 µm to 15 µm.

### [Nonaqueous Electrolyte]

The nonaqueous electrolyte of the lithium-ion secondary battery has lithium-ion conductivity. The nonaqueous electrolyte may be a liquid electrolyte (electrolyte solution) or a solid electrolyte.

As the solid electrolyte, a solid or gel polymer electrolyte or an inorganic solid electrolyte can be used, for example. As the inorganic solid electrolyte, a material (e.g., an oxide-based solid electrolyte, a sulfide-based solid electrolyte, or a halogen-based solid electrolyte) known in the field of, for example, all-solid-state lithium-ion secondary batteries can be used. The polymer electrolyte contains a lithium salt and a matrix polymer, or contains a nonaqueous solvent, a lithium salt, and a matrix polymer, for example. As the matrix polymer, a polymer material that absorbs the nonaqueous solvent to gel is used, for example. Examples of the polymer material include fluorocarbon resin, acrylic resin, and polyether resin.

The electrolyte solution contains a nonaqueous solvent and an electrolyte salt. In the case of a lithium-ion secondary battery, the electrolyte salt includes at least a lithium salt. The concentration of the lithium salt in the electrolyte solution is 0.5 mol/L or more and 2 mol/L or less, for example. The nonaqueous electrolyte may contain a known additive.

Examples of the nonaqueous solvent include cyclic carbonates, chain carbonates, and cyclic carboxylic acid esters. Examples of the cyclic carbonates include propylene carbonate (PC) and ethylene carbonate (EC). Examples of the chain carbonates include diethyl carbonate (DEC), ethyl methyl carbonate (EMC), and dimethyl carbonate (DMC). Examples of the cyclic carboxylic acid esters include γ-butyrolactone (GBL) and γ-valerolactone (GVL). One nonaqueous solvent may be used alone, or two or more nonaqueous solvents may be used in combination.

Examples of the lithium salt include lithium salts of chlorine-containing acids (e.g., LiClO₄, LiAlCl₄, and LiB₁₀Cl₁₀), lithium salts of fluorine-containing acids (e.g., LiPF₆, LiBF₄, LiSbF₆, LiAsF₆, LiCF₃SO₃, and LiCF₃CO₂), lithium salts of fluorine-containing acid imides (e.g., LiN(SO₂F)₂, LiN(CF₃SO₂)₂, LiN(CF₃SO₂)(C₄F₉SO₂), and LiN(C₂F₅SO₂)₂), and lithium halides (e.g., LiCl, LiBr, and LiI). One lithium salt may be used alone, or two or more lithium salts may be used in combination.

One example of the configuration of the secondary battery may be a configuration in which an electrode group formed by winding the positive electrode and the negative electrode with the separator therebetween is housed together with the electrolyte in an outer case. However, the configuration is not limited thereto, and another form of the electrode group may also be employed. For example, a stacked electrode group formed by stacking the positive electrode and the negative electrode with the separator therebetween may be used. The form of the secondary battery is also not limited, and may be cylindrical, prismatic, coin shaped, button shaped, or laminated, for example.

The following describes the configuration of a secondary battery with reference to FIG. 1. FIG. 1 is a longitudinal sectional view of a cylindrical nonaqueous secondary battery 10, which is an example of the present embodiment. However, the present disclosure is not limited to the following configuration.

The secondary battery 10 includes an electrode group 18, an electrolyte (not illustrated), and a bottomed cylindrical battery can 22 that houses these components. A sealing body 11 is crimped and fixed to the opening of the battery can 22 via a gasket 21. In the above configuration, the interior of the battery is sealed. The sealing body 11 includes a valve body 12, a metal plate 13, and an annular insulating member 14 provided between the valve body 12 and the metal plate 13. The valve body 12 and the metal plate 13 are connected to each other at their respective centers. A positive electrode lead 15a led from a positive electrode plate 15 is connected to the metal plate 13. In the above configuration, the valve body 12 functions as an external terminal of the positive electrode. A negative electrode lead 16a led from a negative electrode plate 16 is connected to the inner bottom surface of the battery can 22. An annular groove 22a is formed in the vicinity of the opening end of the battery can 22. A first insulation plate 23 is positioned between one of the end surfaces of the electrode group 18 and the annular groove 22a. A second insulation plate 24 is positioned between the other end surface of the electrode group 18 and the bottom of the battery can 22. The electrode group 18 is formed by winding the positive electrode plate 15 and the negative electrode plate 16 with a separator 17 therebetween.

### (Supplemental Note)

According to the above description of the embodiments, the following techniques are disclosed.

### (Technique 1)

A nonaqueous electrolyte secondary battery including:
a first electrode; a second electrode; a nonaqueous electrolyte; and a separator provided between the first electrode and the second electrode,
wherein the first electrode includes a first current collector and a first active material layer supported on the first current collector,
the first active material layer contains a first active material, a binder, and an additive,
the additive is a polymer material having a melting point or thermal decomposition temperature of 200°C or higher and 500°C or lower, and
the polymer material has a linear structure.

### (Technique 2)

The nonaqueous electrolyte secondary battery according to Technique 1, wherein an aspect ratio: DL/DW is 1.5 or less, where DL represents a length of a major axis of particles of the polymer material, the major axis defining a maximum particle diameter thereof, and DW represents a length of a minor axis perpendicular to the major axis at a midpoint thereof.

### (Technique 3)

The nonaqueous electrolyte secondary battery according to Technique 1 or 2, wherein in a cross section of the first active material layer, the polymer material forms a plurality of island-shaped regions and is dispersed therein, and
when the first active material layer is increased in temperature from 25°C to 400°C or higher, an area of the island-shaped regions increases to four times or more in the cross section of the first active material layer.

### (Technique 4)

The nonaqueous electrolyte secondary battery according to any one of Techniques 1 to 3, wherein a ratio η100/η1 between a complex viscosity η1 at an angular frequency of 1 rad/s and a complex viscosity η100 at an angular frequency of 100 rad/s for the polymer material at 350°C is 5 or less.

### (Technique 5)

The nonaqueous electrolyte secondary battery according to any one of Techniques 1 to 4, wherein the polymer material has a main chain having a phenylene group and a sulfide group.

### (Technique 6)

The nonaqueous electrolyte secondary battery according to Technique 5, wherein the main chain has a repeating structure represented by a formula: 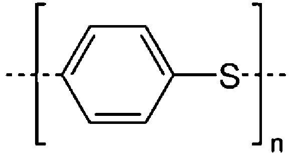 (where n is any integer).

### (Technique 7)

The nonaqueous electrolyte secondary battery according to Technique 6, wherein the polymer material includes polyphenylene sulfide.

### (Technique 8)

The nonaqueous electrolyte secondary battery according to any one of Techniques 1 to 7, wherein the polymer material contains chloride ions in an amount of 10 ppm or more and 1000 ppm or less in terms of mass.

### (Technique 9)

The nonaqueous electrolyte secondary battery according to any one of Techniques 1 to 8, wherein a content of the polymer material in the first active material layer is 0.01% by mass or more and 5% by mass or less.

### (Technique 10)

The nonaqueous electrolyte secondary battery according to any one of Techniques 1 to 9, wherein the first active material contains at least one selected from the group consisting of a carbon material and a silicon-containing material.

### (Technique 11)

The nonaqueous electrolyte secondary battery according to any one of Techniques 1 to 9, wherein the first active material contains a lithium-containing transition metal oxide,
the lithium-containing transition metal oxide contains lithium and Ni, and includes a lithium nickel oxide having a layered rock-salt type crystal structure, and
a proportion of Ni among metal elements other than Li in the lithium nickel oxide is 50 at% or more.

### (Technique 12)

An electrode for secondary batteries including:
a first current collector; and a first active material layer supported on the first current collector,
wherein the first active material layer contains a first active material, a binder, and an additive,
the additive is a polymer material having a melting point or thermal decomposition temperature of 200°C or higher and 500°C or lower, and
the polymer material has a linear structure.

Hereinafter, the present disclosure is specifically described based on samples of experimental examples, but the present disclosure is not limited to the following examples.

### <<Sample R>>

### [Positive Electrode Production]

A composite oxide N (LiNi_{0.85}Co_{0.10}Al_{0.05}O₂) having an average particle diameter of 13 µm was used as a positive electrode active material. In addition, an aluminum foil having a thickness of 15 µm was prepared as a positive electrode current collector. NMP was added to a positive electrode mixture containing the positive electrode active material, acetylene black, and polyvinylidene fluoride (PVDF) in a mass ratio of 95:2.5:2.5, and the resulting mixture was stirred to prepare a positive electrode slurry. The positive electrode slurry was applied to the surfaces of the aluminum foil being a positive electrode current collector. The resulting coated films were dried to form unrolled layers on the respective sides of the aluminum foil. Next, the unrolled layers were rolled to form positive electrode active material layers having a density of the positive electrode active material of 3.6 g/cm³. The total thickness of the positive electrode after the rolling was 160 µm.

### [Negative Electrode Production]

Water was added to a negative electrode mixture containing graphite being a negative electrode active material, SiOₓ (x = 1.0) being a composite material of silicon and SiO₂, sodium carboxymethyl cellulose (CMC-Na), and styrene-butadiene rubber (SBR) in a mass ratio of 95:1:2:2, and the resulting mixture was stirred to prepare a negative electrode slurry. Next, the negative electrode slurry was applied to the surfaces of a copper foil being a negative electrode current collector. The resulting coated films were dried and then rolled to form negative electrode active material layers on the respective sides of the copper foil. The density of the negative electrode active material in the negative electrode active material layers was adjusted to 1.6 g/cm³. The thickness of the entirety of the negative electrode was 170 µm.

### [Nonaqueous Electrolyte Preparation]

LiPF₆ was dissolved at a concentration of 1.0 mol/L in a mixed solvent containing ethylene carbonate (EC) and diethyl carbonate (DEC) in a volume ratio of 3:7 to prepare a nonaqueous electrolyte.

### [Secondary Battery Fabrication]

An electrode group was formed by attaching tabs to the respective electrodes and spirally winding the positive electrode and negative electrode with a separator (thickness 14 µm) therebetween so that the tabs were located at the outermost perimeter. The separator includes a substrate layer, being a polyethylene-made microporous thin film having a thickness of 10 µm, and a heat-resistant layer having a thickness of 4 µm and stacked on one side (positive electrode side) of the substrate layer. The melting point of the microporous thin film is 150°C. The heat-resistant layer contains an inorganic oxide filler (alumina) in an amount of 20% by mass, with the rest consisting of aromatic polyamide (aramid). The electrode group was inserted into an outer body made of an aluminum laminate film. The outer body was vacuum dried at 105°C for 2 hours, and then filled with the electrolyte. The opening of the outer body was sealed to obtain a secondary battery sample R.

### <<Sample A1>>

Except that polyphenylene sulfide (PPS) having a linear structure was incorporated as the polymer material (P) into the positive electrode mixture at a content of 1.3% by mass, a secondary battery sample A1 was fabricated in the same manner as the sample R. The melt viscoelasticities (η1, η100, and ratio η100/η1) of the structure of PPS having a linear structure were η1 = 16.8 Pa·s, η100 = 5.1 Pa·s, and η100/η1 = 3.3.

Details of PPS used in the sample A1 are indicated below.

### <PPS Having Linear Structure>

Thermal decomposition temperature: 495°C
Average particle diameter (D50): 35 µm
Weight average molecular weight: 12,000
BET specific surface area: 1.6 m²/g or less
Melting point: 290°C
Chloride ion content: 100 ppm or less

The Voronoi variance of island-shaped regions obtained by the aforementioned method was 2 × 10⁷ µm⁴ or less. The average area S (25°C) was 200 µm² or less. The average perimeter was 60 µm or less. The agglomerated particle area was 900 µm² or less.

### <<Sample A2>>

Except that the content of the polymer materials (P) (PPS) in the positive electrode mixture was changed to that shown in Table 1, a sample A2 of an example was fabricated in the same manner as the sample A1.

### <<Sample a1>>

Except that the polymer material (P) (PPS) contained in the positive electrode mixture was changed to polyphenylene sulfide (PPS) having a crosslinked structure, a sample a1 of a comparative example was fabricated in the same manner as the sample A1. The melt viscoelasticities (η1, η100, and ratio η100/η1) of the structure of PPS having a crosslinked structure were η1 = 13.0 Pa·s, η100 = 2.1 Pa·s, and η100/η1 = 6.2.

The following indicates details of PPS used for the sample a1.

### <PPS Having Crosslinked Structure>

Thermal decomposition temperature: 495°C
Average particle diameter (D50): 35 µm
Weight average molecular weight: 12,000
BET specific surface area: 1.6 m²/g
Chloride ion content: 100 ppm or less

The Voronoi variance of island-shaped regions obtained by the aforementioned method was 2 × 10⁷ µm⁴ or less, the average area S (25°C) was 200 µm² or less, the average perimeter was 60 µm or less, and the agglomerated particle area was 900 µm² or less.

### <<Sample A3>>

Except that polyphenylene sulfide (PPS) having a linear structure, which was the same as that used for the sample A1, was incorporated as a polymer material (P) into the negative electrode mixture in an amount of 1.3% by mass, a secondary battery sample A3 was fabricated in the same manner as the sample R.

The Voronoi variance of island-shaped regions obtained by the aforementioned method was 2 × 10⁷ µm⁴ or less. The average area S (25°C) was 200 µm² or less. The average perimeter was 60 µm or less. The agglomerated particle area was 900 µm² or less.

### <<Sample A4>>

Except that the content of the polymer material (P) (PPS) in the negative electrode mixture was changed to that shown in Table 1, a sample A4 of an example was fabricated in the same manner as the sample A3.

### <<Sample a2>>

Except that the polymer material (P) (PPS) contained in the negative electrode mixture was changed to polyphenylene sulfide (PPS) having a crosslinked structure, which was the same as that used for the sample a1, a sample a2 of a comparative example was fabricated in the same manner as the sample A3.

### [Evaluation]

Evaluation as described below was performed on each of the obtained samples.
(a) In an environment at 25°C, constant current charging was performed on the battery sample at a constant current of 0.3 It until the voltage reached 4.2 V, followed by constant voltage charging at a constant voltage of 4.2 V until the current reached 0.05 It.
(b) In an environment at 25°C, the tip of a round nail (diameter 2.7 mm) was brought into contact with the central part of the battery sample charged in (a), and made to penetrate the battery sample at a rate of 1 mm/second. Directly after a battery voltage drop (Δ50 mV) due to the internal short circuit was detected, the round nail penetration was stopped. The surface temperature of the battery sample was measured one minute after the short circuit occurred. The surface temperatures are shown in Table 1.

In Table 1, when the "polymerization type" is the "linear", the content of the linear polymer having no crosslinked structure is 80% by mass or more in PPS. When the "polymerization type is the "crosslinked", the content of the crosslinked polymer having a crosslinked structure is 80% by mass or more in PPS.

**[Table 1]**

| Sample | Additive | Addition site | Content (% by mass) | Polymerization type | η1 | η100 | η100/η1 | Surface temperature (°C) |
|---|---|---|---|---|---|---|---|---|
| R | Absent | - | - | - | - | - | - | 80 < |
| A1 | PPS | Positive electrode | 1.3 | Linear | 16.8 | 5.1 | 3.3 | 36 |
| A2 | PPS | Positive electrode | 0.3 | Linear | 16.8 | 5.1 | 3.3 | 63 |
| a1 | PPS | Positive electrode | 1.3 | Crosslinked | 13.0 | 2.1 | 6.2 | 80 < |
| A3 | PPS | Negative electrode | 1.3 | Linear | 16.8 | 5.1 | 3.3 | 71 |
| A4 | PPS | Negative electrode | 0.3 | Linear | 16.8 | 5.1 | 3.3 | 75 |
| a2 | PPS | Negative electrode | 1.3 | Crosslinked | 13.0 | 2.1 | 6.2 | 80 < |

### <<Samples B1 to B10>>

Except that the content of the polymer material (P) (PPS) in the positive electrode mixture or the negative electrode mixture and the diffusion factor (S (400°C)/S (25°C)) were changed to those shown in Table 2, secondary battery samples B1 to B5 and B6 to 10 were fabricated and evaluated in the same manner as the sample A1 and the sample A3, respectively.

The diffusion factor can be controlled based on, for example, the melting point, thermal decomposition temperature, weight average molecular weight, degree of polymerization, polymerization method of polyphenylene sulfide. The thermal decomposition temperatures of PPS1 to PPS4 used for the samples B1 to B10 are indicated below.

### <PPS1>

Thermal decomposition temperature: 500°C
Average particle diameter (D50): 35 µm
Weight average molecular weight: 13,000
BET specific surface area: 1.6 m²/g
Melting point: 280°C
Chloride ion content: 100 ppm or less

### <PPS2>

Thermal decomposition temperature: 490°C
Average particle diameter (D50): 25 µm
Weight average molecular weight: 50,000
BET specific surface area: 1.3 m²/g
Melting point: 285°C
Chloride ion content: 100 ppm or less

### <PPS3>

Thermal decomposition temperature: 485°C
Average particle diameter (D50): 40 µm
Weight average molecular weight: 18,000
BET specific surface area: 1.8 m²/g
Melting point: 295°C
Chloride ion content: 100 ppm or less

### <PPS4>

Thermal decomposition temperature: 475°C
Average particle diameter (D50): 15 µm
Weight average molecular weight: 30,000
BET specific surface area: 1.4 m²/g or less
Melting point: 270°C
Chloride ion content: 100 ppm or less

In each of the samples B1 to B10, the Voronoi variance of island-shaped regions was 2 × 10⁷ µm⁴ or less, the average area S (25°C) was 200 µm² or less, the average perimeter was 60 µm or less, and the agglomerated particle area was 900 µm² or less.

Each average area S (400°C) was determined by the aforementioned method after a separately prepared negative electrode was heated to 400°C. The average area S (25°C) does not need to be measured strictly at 25°C. When the average area S (25°C) is measured at room temperature (e.g., 15°C to 40°C), the same value can be obtained regardless of the seasons.

**[Table 2]**

| Sample | Additive | Addition site | Content (% by mass) | Diffusion factor | Polymerization type | Surface temperature (°C) |
|---|---|---|---|---|---|---|
| R | absent | - | - | - | - | 80 < |
| B1 | PPS2 | Positive electrode | 1.3 | 4.0 | Linear | 47 |
| B2 | PPS3 | Positive electrode | 1.3 | 6.0 | Linear | 33 |
| B3 | PPS4 | Positive electrode | 1.3 | 6.4 | Linear | 38 |
| B4 | PPS3 | Positive electrode | 0.3 | 6.0 | Linear | 56 |
| B5 | PPS1 | Positive electrode | 1.3 | 3.4 | Linear | 72 |
| B6 | PPS2 | Negative electrode | 1.3 | 4.0 | Linear | 64 |
| B7 | PPS3 | Negative electrode | 1.3 | 6.0 | Linear | 62 |
| B8 | PPS4 | Negative electrode | 1.3 | 6.4 | Linear | 63 |
| B9 | PPS3 | Negative electrode | 0.3 | 6.0 | Linear | 66 |
| B10 | PPS1 | Negative electrode | 1.3 | 3.4 | Linear | 75 |

In Table 2, the surface temperatures of the samples B1 to B10 are significantly lower than that of the sample R. It can be accordingly understood that in particular, the larger the diffusion factor, the lower the surface temperature tends to be.

### <<Samples C1 to C10>>

Except that the content of the polymer material (P) (PPS) in the positive electrode mixture or the negative electrode mixture and the aspect ratio of particles of the polymer material were changed to those shown in Table 3, secondary battery samples C1 to C5 and C6 to C10 were fabricated and evaluated in the same manner as the samples A1 andA5, respectively.

**[Table 3]**

| Sample | Additive | Addition site | Content (% by mass) | Polymerization type | Aspect ratio DL/DW | Surface temperature (°C) |
|---|---|---|---|---|---|---|
| R | absent | - | - | - | - | 80 < |
| C1 | PPS | Positive electrode | 1.3 | Linear | 1.5 | 48 |
| C2 | PPS | Positive electrode | 1.3 | Linear | 1.3 | 39 |
| C3 | PPS | Positive electrode | 1.3 | Linear | 1.2 | 33 |
| C4 | PPS | Positive electrode | 0.3 | Linear | 1.2 | 57 |
| C5 | PPS | Positive electrode | 1.3 | Linear | 1.6 | 72 |
| C6 | PPS | Negative electrode | 1.3 | Linear | 1.5 | 48 |
| C7 | PPS | Negative electrode | 1.3 | Linear | 1.3 | 39 |
| C8 | PPS | Negative electrode | 1.3 | Linear | 1.2 | 33 |
| C9 | PPS | Negative electrode | 0.3 | Linear | 1.2 | 57 |
| C10 | PPS | Negative electrode | 1.3 | Linear | 1.6 | 78 |

In Table 3, the surface temperatures of the samples C1 to C10 are significantly lower than that of the sample R. It can be accordingly understood that in particular, the smaller the aspect ratio, the lower the surface temperature tends to be.

### [Industrial Applicability]

The nonaqueous electrolyte secondary battery according to the present disclosure is useful as a main power source for mobile communication devices, portable electronic devices, and electric vehicles, for example.

Although the present invention has been described in terms of the presently preferable embodiments, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Reference Signs List]

10: secondary battery, 11: sealing body, 12: valve body, 13: metal plate, 14: insulating member, 15: positive electrode plate, 15a: positive electrode lead, 16: negative electrode plate, 16a: negative electrode lead, 17: separator, 18: electrode group, 21: gasket, 22: battery can, 22a: groove, 23: first insulation plate, 24: second insulation plate

## Claims

1. A nonaqueous electrolyte secondary battery comprising:
a first electrode; a second electrode; a nonaqueous electrolyte; and a separator provided between the first electrode and the second electrode,
wherein the first electrode includes a first current collector and a first active material layer supported on the first current collector,
the first active material layer contains a first active material, a binder, and an additive,
the additive is a polymer material having a melting point or thermal decomposition temperature of 200°C or higher and 500°C or lower, and
the polymer material has a linear structure.

2. The nonaqueous electrolyte secondary battery according to claim 1,
wherein an aspect ratio: DL/DW is 1.5 or less, where DL represents a length of a major axis of particles of the polymer material, the major axis defining a maximum particle diameter thereof, and DW represents a length of a minor axis perpendicular to the major axis at a midpoint thereof.

3. The nonaqueous electrolyte secondary battery according to claim 1,
wherein in a cross section of the first active material layer, the polymer material forms a plurality of island-shaped regions and is dispersed therein, and
when the first active material layer is increased in temperature from 25°C to 400°C or higher, an area of the island-shaped regions increases to four times or more in the cross section of the first active material layer.

4. The nonaqueous electrolyte secondary battery according to claim 1,
wherein a ratio η100/η1 between a complex viscosity η1 at an angular frequency of 1 rad/s and a complex viscosity η100 at an angular frequency of 100 rad/s for the polymer material at 350°C is 5 or less.

5. The nonaqueous electrolyte secondary battery according to claim 1,
wherein the polymer material has a main chain having a phenylene group and a sulfide group.

6. The nonaqueous electrolyte secondary battery according to claim 5,
wherein the main chain has a repeating structure represented by a formula: 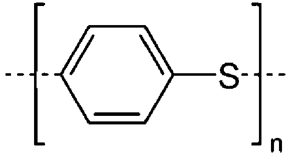 (where n is any integer).

7. The nonaqueous electrolyte secondary battery according to claim 6,
wherein the polymer material includes polyphenylene sulfide.

8. The nonaqueous electrolyte secondary battery according to claim 1,
wherein the polymer material contains chloride ions in an amount of 10 ppm or more and 1000 ppm or less in terms of mass.

9. The nonaqueous electrolyte secondary battery according to claim 1,
wherein a content of the polymer material in the first active material layer is 0.01% by mass or more and 5% by mass or less.

10. The nonaqueous electrolyte secondary battery according to claim 1,
wherein the first active material contains at least one selected from the group consisting of a carbon material and a silicon-containing material.

11. The nonaqueous electrolyte secondary battery according to claim 1,
wherein the first active material contains a lithium-containing transition metal oxide,
the lithium-containing transition metal oxide contains lithium and Ni, and includes a lithium nickel oxide having a layered rock-salt type crystal structure, and
a proportion of Ni among metal elements other than Li in the lithium nickel oxide is 50 at% or more.

12. An electrode for secondary batteries comprising:
a first current collector; and a first active material layer supported on the first current collector,
wherein the first active material layer contains a first active material, a binder, and an additive,
the additive is a polymer material having a melting point or thermal decomposition temperature of 200°C or higher and 500°C or lower, and
the polymer material has a linear structure.
